Europäisches Patentamt

European Patent Office

Office européen des brevets

Publication number: **0 367 434**

A2

# EUROPEAN PATENT APPLICATION

Application number: **89310523.9**

Date of filing: **13.10.89**

Int. Cl.⁵ **B23K 35/00 , B23K 9/04 , C23C 24/10 , C04B 41/51**

Priority: **01.11.88 US 265778**

Date of publication of application:
**09.05.90 Bulletin 90/19**

Designated Contracting States:
**BE CH DE FR GB IT LI NL**

Applicant: **FOSBEL INTERNATIONAL LIMITED**
**285 Long Acre Nechells**
**Birmingham B7 5JR(GB)**

Inventor: **Briggs, John**
**20200 Sheldon Road**
**Cleveland Ohio 44142(US)**
Inventor: **Zvorec, Charles**
**20200 Sheldon Road**
**Cleveland Ohio 44142(US)**

Representative: **Moore, John Hamilton**
**Foseco Holding International Limited Group**
**Patents Department 285 Long Acre Nechells**
**Birmingham B7 5JR(GB)**

## Cermet welding.

Methods for producing composite weld masses are disclosed which include:

(a) The application of a composite material on a ceramic base, beginning with a ceramic layer, and gradually changing the composition of the weld material from all ceramic to all metallic. The application of material may be continued, while returning the composite material to all ceramic, thereby forming a sandwich structure.

(b) The application of a composite material (44) on a metallic base, beginning with a metallic layer (40) and gradually changing the composition of the weld material from all metallic to all ceramic. Sandwich structures may be formed as in (a) above.

(c) The above processes may be tailored to provide a weld mass (62) in which the continuous phase (66) is ceramic, but which contains a metallic phase (64), or to provide a weld mass in which the continuous phase is metallic, but which contains a ceramic phase.

*FIG.3*

EP 0 367 434 A2

## CERMET WELDING

This invention relates to processes for forming composite materials and, in particular, for making welds or surface coatings of composite materials on a metal or ceramic base material.

Ceramic welding processes have been developed for forming refractory coatings on refractory surfaces, and especially for repairing or strengthening furnace linings in situ. In processes of this type, as described for example in U.S. Patent No. 3,684,560, particles of one or more oxidizable substances (which burn by combining with oxygen with accompanying evolution of heat) and metal oxide particles of one or more refractory compounds (which melt under the heat of combustion), are projected against a surface and the particles of the oxidizable substance or substances are burned in the presence of the metal oxide particles to form a coherent refractory mass which adheres to the surface and forms a coating thereon.

The present invention specifically relates to:

(a) the application of a composite material on a ceramic base, beginning with a ceramic layer, and more or less gradually and continuously changing the composition of the weld material from all ceramic to all metallic; in a variation of this process, the application of material is continued, while returning the material compostion to all ceramic, thereby forming a sandwich structure on the substrate;

(b) the application of a composite material on a metallic base, beginning with a metallic layer and more or less gradually and continuously changing the composition of the weld material from all metallic to all ceramic; sandwich type structures may also be formed on the substrate as explained in paragraph (a) above; and

(c) a modification of the above processes by tailoring them to provide a weld mass in which the continuous phase is ceramic, but which contains a metallic phase, and alternatively, providing a weld mass in which the continuous phase is metallic, but which contains a ceramic phase.

The principal advantage of materials produced in accordance with this invention is that, depending on the final composite make-up, they have hardness, erosion and abrasion characteristics of ceramics, and the toughness of metals.

In carrying out processes related to paragraphs (a) and (b) above, a ceramic powder and fuel mixture is fed from a first hopper to an augur or rotating disc which supplies the powder at a controlled rate to a venturi mixer. Oxygen gas is supplied to the mixer, also in controlled amounts, so that the ceramic particles and fuel mixture are carried through associated conduits in an oxygen $O_2N_2$ stream. Other inert gases may also be used, e.g., argon/oxygen, depending on the metallic fuels contained. The particles are thereafter supplied to an injector, with additional controlled supply of oxygen and through further conduits to one or more nozzle discharge lances. At the same time, a second parallel arrangement is set up to supply a metallic particle and fuel mixture to the nozzle lance.

By controlling the supply of ceramic and metallic particles continuously during the process, the composition of the weld mass may be altered from all ceramic to all metallic, or vice versa, with the rate of change occurring gradually or quickly, as desired.

Upon exiting the nozzle lances, combustion is instantaneously achieved as the fuel particles oxidize, creating sufficient thermal energy to melt the metal and ceramic particles, as well as a localized area or zone of the substrate. To insure combustion, the particles may be projected against the material to be coated in a hot atmosphere or an ambient temperature with an auxiliary ignition source. Alternatively, or additionally, the material to be coated may be preheated. The result is a composite mass which adheres, i.e., is fused, to the base or substrate as a coating or a mass.

In alternative embodiments, the invention relates to the formation of a weld mass in which the continuous phase is ceramic, but contains a metallic phase or vice versa. In such a process, the mixed powder, having for example a major proportion of metallic powder and minor portion of ceramic powder, is fed to an augur or disc-type powder dispenser, and from there to a venturi mixer where $O_2$ is added at a controlled rate, causing the powder to flow in an $O_2N_2$ stream to an injector where additional $O_2$ is added. The composite is then discharged from a lance onto a surface as in the previously described process to form a composite mass, having either a continuous ceramic or metallic phase, which is fused to the surface in coating form.

It will become apparent from this disclosure that the present invention provides great flexibility through the multiple feed and simultaneous discharge of two or more materials, while allowing gradual and controlled transition from one to the other and back again. It will be understood that this gradual change minimizes problems of different rates of thermal expansion as temperatures fluctuate. Another advantage of the welding process of this invention over conventional press and sinter techniques (which rely on fixed material producing molds which affect the powder by pressure and heat) is that fusion is involved which produces physical change in the powder materials upon impact and weld reaction, and therefore can be used to produce large masses of material rapidly and more economically than conventional techniques. Moreover, the process of this invention is a controllable, portable process carried out in situ.

By further enabling sandwich structures to be formed in a similar manner, the invention has further advantages over prior art plasma deposition processes by reason of its simplicity of application, controlled rate of deposition, and cost of application. A still further advantage is the very small heat affected zone created in the base material.

Metals usable in carrying out the processes of the invention include ferrous and noble metals, copper and manganese. Refractory oxides include silica, alumina, magnesia, calcia, titania, zirconia, chrome, iron-oxide, and combinations of these. Other suitable refractories are graphite, carbides, nitrides and carbo-nitrides.

The ceramo-metallic and metallo-ceramic masses produced in accordance with the invention are intended for use in many abrasion, erosion, corrosion and armament resistant applications. Specific contemplated applications include:

abrasive resistant facings on slurry handling/transportation systems such as splitters, elbows, pipelines, pumps etc.;

abrasive resistant facings on dry material handling/transportation systems such as coal cars;

abrasive resistant facings on mining or agricultural equipment such as plows and digger teeth;

corrosion resistant facing and materials for use in any of the above, or other high temperature or highly corrosive environments.

Other objects and advantages of the invention will become apparent from the following detailed description of the invention.

FIGURE 1 is a schematic diagram illustrating a composite structure forming process in accordance with one exemplary embodiment of the invention;

FIGURE 2 is a schematic diagram illustrating a composite structure forming process in accordance with another exemplary embodiment of the invention;

FIGURE 3 is a photomicrograph of a composite material layer sandwiched between metallic masses in accordance with an exemplary embodiment of the invention;

FIGURES 4, 5 and 6 represent successively higher magnifications of the composite material layer shown in FIGURE 3;

FIGURE 7 is a photomicrograph of a ceramo-metallic composite structure in accordance with another exemplary embodiment of the invention; and

FIGURES 8 and 9 are photomicrographs of adjacent layers of a composite material deposit in accordance with the invention.

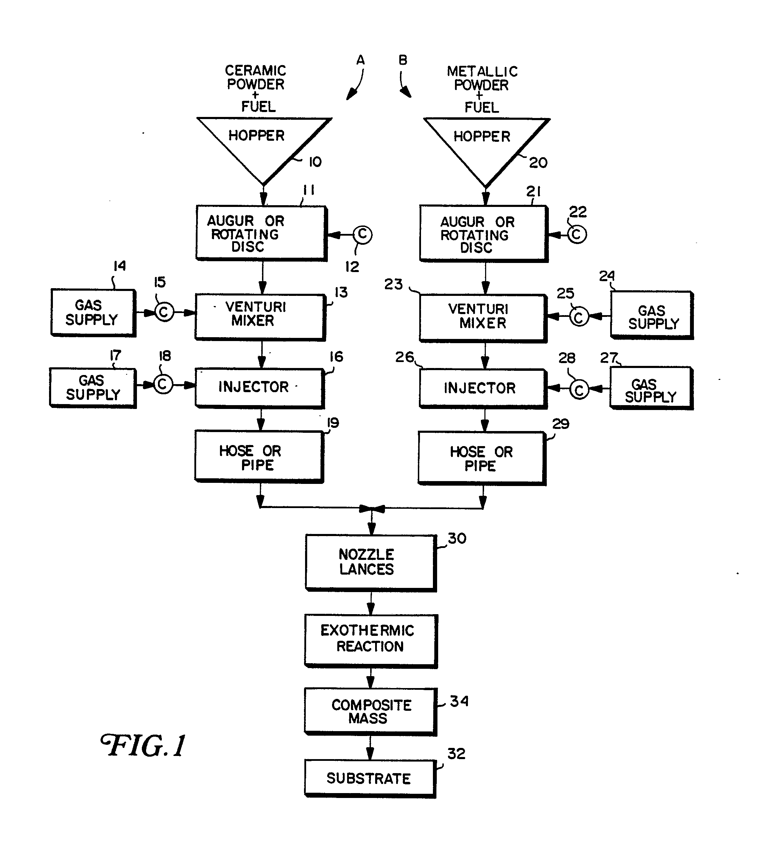

With reference now to FIGURE 1, a flow diagram is illustrated which relates to a process by which either a metal or ceramic substrate may be coated with a composite mass in accordance with a first aspect of the invention.

As noted above, for example, a ceramic substrate may be provided with a composite material coating which begins with a ceramic layer and gradually changes to an all metallic layer. Alternatively, a metal substrate may be provided with a composite material coating which begins with a metallic layer and gradually changes to an all ceramic layer.

In order to effect such coating processes, means are provided for supplying ceramic powder and metallic powder, respectively, along with fine oxidizable (combustible) fuel particles to one or more nozzle discharge lances in controlled amounts, depending on the particular application. In other words, parallel and controllable flow paths are provided so that the lance may discharge ceramic material, metallic material, or any combination of the two, as desired.

The flow paths and respective control means for each, designated A and B in FIGURE 1, are identical. Thus, hoppers 10, 20 are provided for supplying ceramic powder and metallic powder, respectively, as required. It will be understood that both the ceramic and metallic powders are mixed with fine oxidizable fuel particles to facilitate combustion as will be described further hereinbelow.

The ceramic powder stored in a containment hopper 10 is preferably chosen from refractory oxides such as silica, alumina, magnesia, calcia, titania, zirconia, chrome, iron oxide or combinations thereof. Other suitable refractories include graphite, carbides, nitrides and carbo-nitrides. The powder is mixed with various exothermics, e.g., fine oxidizable particles of one or more of silicon, aluminum, and magnesium. These particles are especially useful since they can be oxidized rapidly with a high accompanying evolution of heat, and since these particles themselves form refractory oxides. Other suitable combustibles include calcium, manganese, iron and boron.

The ceramic starting material in hopper 10 preferably comprises 8 to 30% by weight of oxidizable

3

material and 92 to 70% by weight of refractory oxides.

At the same time, the metallic powder stored in a second containment hopper 20 is preferably chosen from the ferrous and noble metals, copper and manganese. The metallic powder is also mixed with fine oxidizable, or combustible, particles as described above.

The ceramic powder and fuel particle mixture is discharged from the hopper 10 onto a rotating disc (or augur, or similar device) 11 which supplies a controlled amount of material to a conduit leading to a venturi mixer 13. The amount of material supplied by the disc or augur 11 is controlled by a regulator 12 and suitable controls associated therewith. The supplied ceramic powder and combustible particles mixture is entrained in a flow of gas, preferably oxygen and $N_2$ or argon, at the venturi mixer 13, which receives gas from a supply 14, controlled by a regulator 15.

The entrained flow thereafter passes through an injector 16 at which point additional gas is added from supply 17 via control valve 18. The mixture thereafter passes into a conduit or hose 19 for discharge through a nozzle discharge lance arrangement 30, onto the substrate 32.

A similar sequence is carried out with respect to the supply of metal powder and combustible fuel particles from hopper 20. Thus, metallic powder is discharged onto a rotating disc or augur 21 from which a controlled amount of material is supplied, via control regulator 22, to a venturi mixer 23. Gas, preferably oxygen, is introduced from gas supply 24 via control regulator 25 to entrain the particles in a gas stream which enters an injector 26 where additional gas is introduced from a supply 27 via control regulator 28. Thereafter, the mixture enters a hose or conduit 29 for discharge through the nozzle discharge lance arrangement 30.

It will be appreciated from the above description that the respective amounts of ceramic and metallic powder which is discharged through the nozzle 30 is controllable by appropriate operation of regulators 12, 15, 18, 22, 25 and 28 so that, for example, the weld composition may be varied gradually from an all ceramic layer adjacent a ceramic substrate, to an all metallic layer remote from the interface and vice versa, depending on the composition of the substrate or material to be coated.

As previously described, the process preferably takes place in a heated environment, and/or with the substrate 32 preheated to about 1200° F, or for metal substrates preheated to 600° to 900° F with an auxiliary ignition source. Thus, upon discharge, the fuel particles oxidize, creating enough thermal energy to melt the combined metal and ceramic (or all metallic, or all ceramic) particles, as well as a localized area of the substrate, to form a composite mass 34 which is fused to the substrate 32.

Thus, in the event a ceramic base material is to be coated, during a first pass of the nozzle lance 30, only the ceramic powder and fuel mixture is discharged; in subsequent passes, the mixture is gradually changed from all ceramic to all metallic. The rate of change is controllable, primarily via actuation of mixture supply regulators 12 and 22 and gas supply regulators 15, 18, 25 and 28.

A similar process is utilized to coat a metallic substrate, with the first pass discharging only the metallic powder mixture, while in second and subsequent passes, the mixture is changed gradually from all metallic to all ceramic.

It will be understood that where sandwich structure coatings are desired, additional passes may be carried out, while continuously changing the mixture back to the composition of the first pass.

In some circumstances where sandwich structures are to be formed, it may be desirable to relatively quickly vary from one composition to the other without the gradual changeover described hereinabove. Thus, a first pass might be all ceramic (on a ceramic substrate), followed by an all metallic second pass, etc. It is also within the scope of the invention to form a sandwich structure by, for example, applying an all metallic layer to a metallic substrate, followed by a composite metallic/ceramic layer, and then a second all metallic layer.

In the chart presented below exemplary oxygen flow rates are shown for various powder/fuel flow rates, and are applicable to the above described processes:

| | (a) | (b) | (c) |
|---|---|---|---|
| Powder flow rate (lbs/min) metallic or ceramic | 1.50 | 3.0 | 5.0 |
| Total oxygen flow rate (scfm) | | | |
| ceramic | 40 | 80 | 70-110 |
| metal | 15 | 25 | 40 |

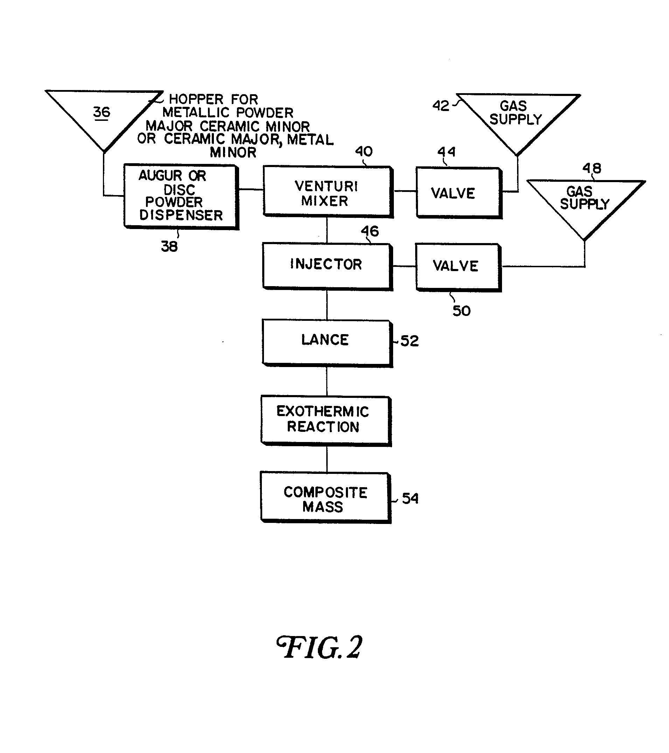

Turning now to FIGURE 2, a flow diagram is illustrated which relates to a process in accordance with an alternative embodiment of the invention wherein a weld mass is formed in which the continuous phase is ceramic, but which contains a metallic phase, and vice versa.

Accordingly, a hopper 36 is utilized for supplying powder which is pre-mixed to provide a metallic major ceramic minor or ceramic major/metallic minor composite along with suitable oxidizable particles as described hereinabove. In this process, there is no continuous change of composition as in the process described in conjunction with FIGURE 1. Otherwise, the process steps are substantially identical. For example, the material is supplied from hopper 36 to an augur or disc powder dispenser 38 and thereafter to a venturi mixer 40. At the mixer, a gas, preferably oxygen, is fed from a supply source 42 at a controlled rate via regulator 44.

From the venturi mixer, the gas and entrained powder mixture flows to an injector 46 where, again, gas is supplied from a source 48 via control regulator 50.

The entrained powder fuel mixture is thereafter forwarded to a discharge lance 52, which may be of conventional, single nozzle construction.

As in the previously described embodiment, upon discharge, the fuel particles oxidize, creating sufficient thermal energy to melt the combined metal and ceramic particles of the mixture, as well as a localized portion or zone of the substrate to which the weld is applied. In this manner, a composite weld mass is created which is fused to the substrate.

The above described process is substantially the same, regardless of whether the continuous phase is ceramic or metallic. However, oxygen flow rates, with a substrate temperature between ambient and 2000° F, will vary for given powder flow rates indicated in the following examples:

| (1) Continuous ceramic phase and minor metallic phase | | | |
|---|---|---|---|
| | (a) | (b) | (c) |
| Powder flow rate (lbs/min) | 1 | 2.1 | 4.6 |
| Oxygen (scfm) | 15-25 | 20-45 | 70-110 |

| (2) Continuous metallic phase and minor ceramic phase | | | |
|---|---|---|---|
| | (a) | (b) | (c) |
| Powder flow rate (lbs/min) | 1 | 2.1 | 3.1 |
| Oxygen (scfm) | 6 | 9 | 12 |

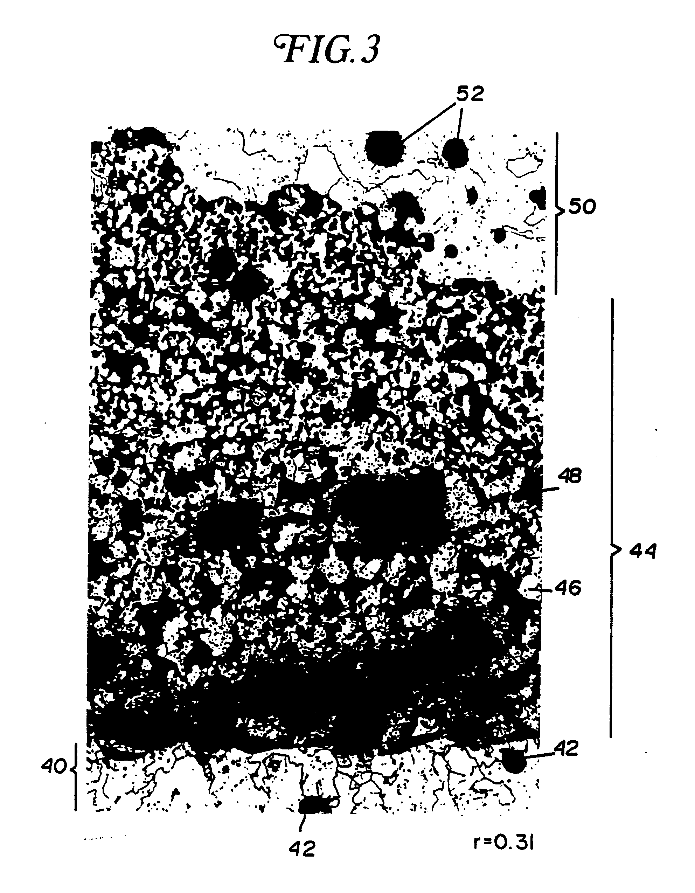

FIGURE 3 is a microphotograph (at 105X) of a layer of composite material, constituting part of a weld or coating applied in the form of a sandwich structure (in accordance with the process described above in conjunction with FIGURE 1), wherein a composite layer is bonded to metallic layers above and below it.

In a first pass, an all metallic ferrite layer 40 was applied to a metallic substrate (not shown) at a powder to gas ratio of 0:31 and a range of powder flow rate from 1.5 to 5 lbs./min. The black dot areas 42 in the layer 40 illustrate the porosity of the metal. In a second pass, a composite layer 44 was applied using the same parameters, comprising an intimate mix of metallic and ceramic phases as a result of added temperature due to the first pass. In this layer, the white areas 46 are metallic and black areas 48 are ceramic, e.g., FeO. In a third pass, a second all metallic layer 50 was applied using the same powder to gas ratio of 0:31, again having increased temperature available, resulting in washing away of all non-metallic phases. The black dot areas 52, again, illustrate the porosity of the metal.

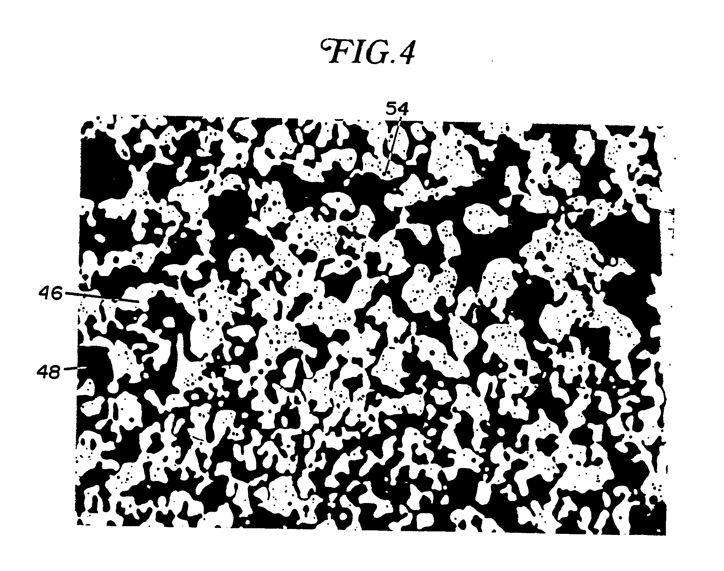

FIGURE 4, which represents a higher magnification (210X) of the structure shown in FIGURE 3, shows the intimate contact between the ceramic and metallic phases in the composite layer 44 formed in the second pass. As in FIGURE 3, the white areas 46 are metallic and the black areas 48 are ceramic. In addition, the small black dots 54 in the white areas are globule oxides in the metal phase.

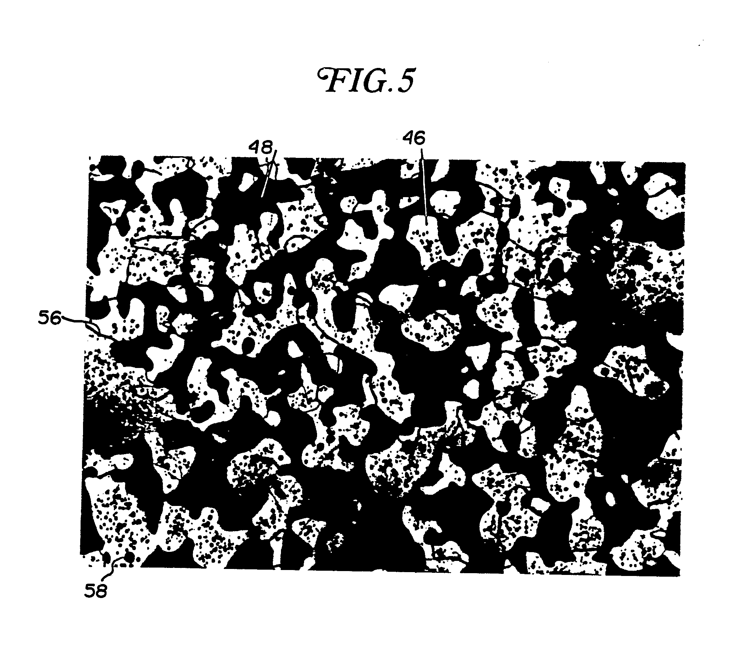

FIGURE 5 is an even higher magnification (425X) of the composite layer 44 shown in FIGURE 3. The FIGURE more clearly illustrates the interlock between metallic phase 46 and ceramic phase 48. Microcracks 56 in the metallic phase also appear in this view, and are indicative of stress itself. In addition, finely dispersed inclusions 58 of ceramic FeO are shown in the metallic phase.

5

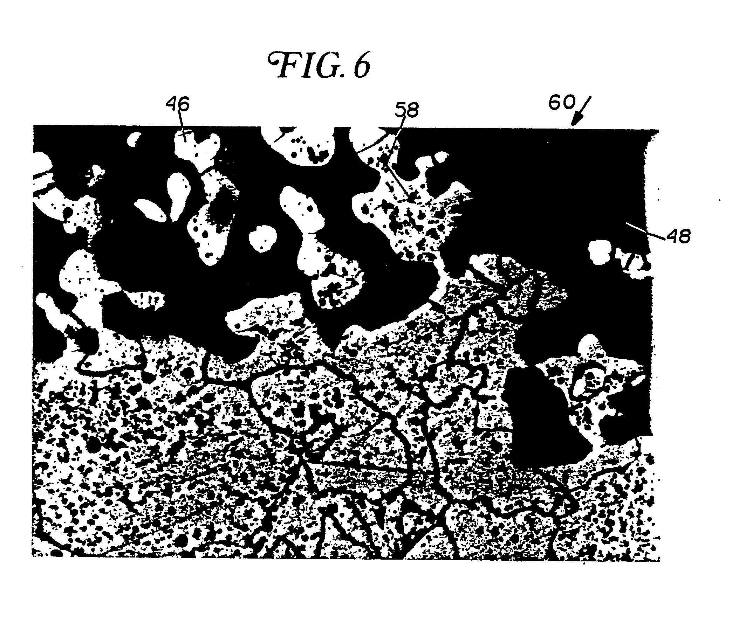

FIGURE 6 is a very high magnification (850X) of the composite layer shown in FIGURE 2. At this level of magnification, micro-cracks 60 are visible in the ceramic phase 48, further indicating that the material has stress relieved during solidification.

The structure illustrated in FIGURES 3 through 6 was produced with a moderate r-value of 0.31. The "r-value" as used herein refers to the relationship between units of oxygen in standard liters per minute (SLPM) and units of iron powder expressed in moles, which in this case is 55 moles per gram. The r-value is the ratio of $O_2$ to Fe, and this value has a significant bearing on the structure of the weld. The objective is to eliminate or add materials, i.e., oxides, inclusions or other structures. Values for r in the range of about .30 to about .50 appear to give the best results. The structure illustrated in FIGURE 3 was found to have very high hardness and to be highly abrasive. The composite layer also shows significantly higher resistance to cutting, compared to the resistance of the metallic layers, when sectioned with alumina cutting wheels.

It will be apparent that by systematically varying the composition of the reacting powder, various combinations of metallic-ceramic materials may be achieved and, in so doing, a wide variety of structures with varying hardness, abrasion, erosion and toughness characteristics may be formed which meet or exceed requirements currently met by more expensive materials.

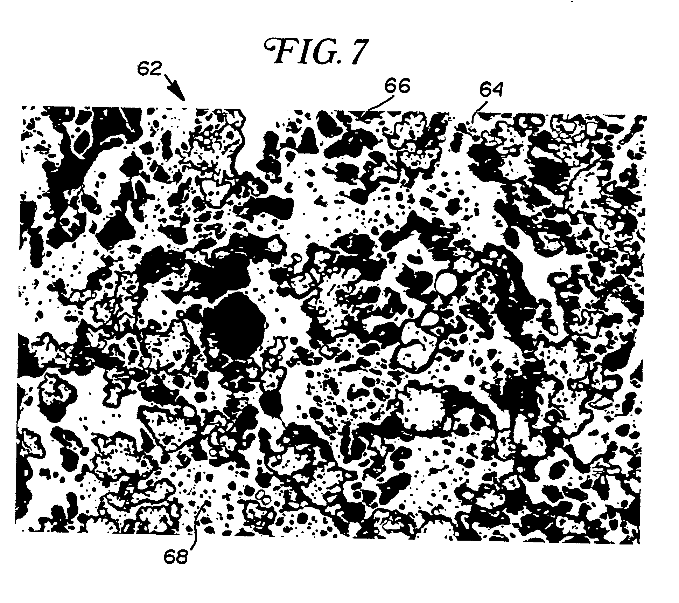

FIGURE 7 represents a structure produced in accordance with the method described herein with reference to FIGURE 2, and is believed to improve the abrasion resistance property of the material. More specifically, FIGURE 7 is a microphotograph of a ceramo-metallic composite wherein metallic particles are dispersed within a continuous ceramic phase, i.e., the major portion of the structure is ceramic.

In FIGURE 7, the composite structure 62 includes a metallic phase (white areas 64) dispersed in a ceramic phase (black areas 66). Black dots 68 in the metallic phase comprise oxides, such as MgO, $Al_2O_3$ and $SiO_2$. The structure in FIGURE 7 was produced in the areas of the deposit where the oxide (slag) is the predominant phase, e.g., at the runoff site where the liquid weld metal and slag run off the weld site. If the substrate is cold and the reaction is not very hot, a similar structure can be found at the bottom of the first layer of the deposit. However, here it is the result of slag that froze on contact with the cold substrate, and because of the relatively cold reaction, did not melt during subsequent passes.

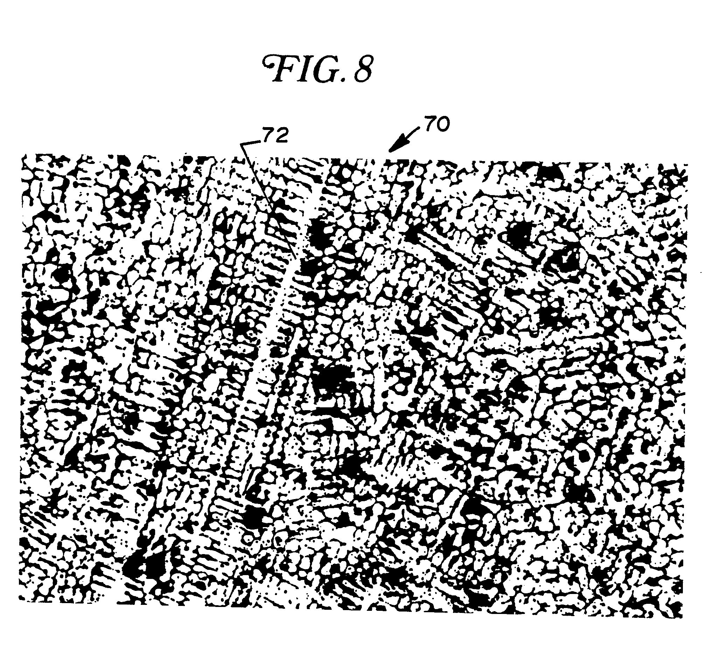

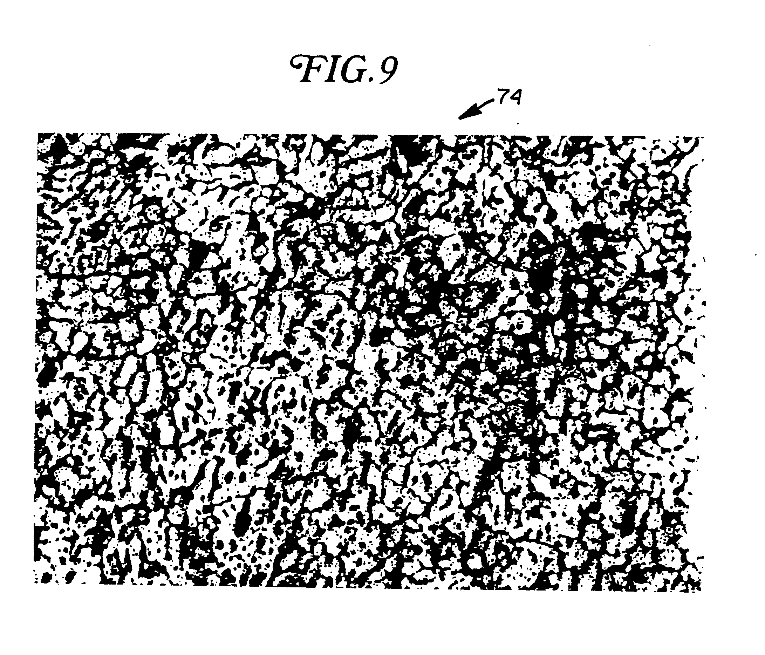

FIGURES 8 and 9 are photomicrographs of additional structures which were created, using higher alloy steel powder. In this case, a FOSBEL mixture "10108" was used with low r values, but very high oxygen flow rates, (oxygen flow rate: 313 SLPM, powder flow rate: 33 moles/min, r = 0.22). The reaction zone in this case appeared hotter than what was expected for the same r conditions and 4600 steel alloy powder. FIGURE 8 was generated from the middle of the third layer of the deposit while FIGURE 9 was generated from the second layer.

In FIGURE 8, the structure 70 includes a line 72 of crystalline interfaces, indicating a dendritic structure, while in FIGURE 9, the structure 74 exhibits a thamnitic structure. Lance to substrate distance, lance speed and various substrate temperatures are why these two successive layers of the same experimental run differ so greatly. It may nevertheless be appreciated that the present invention enables a wide variety of structural configurations to be produced, by varying the parameters discussed herein, such as powder flow, substrate temperature, lance speed, rates and compositions, for both metallic and ceramic phases, as well as r values.

Such structures may be produced in accordance with requirements relating to hardness, abrasion resistance, corrosion resistance, toughness and the like. By establishing processes in which specific properties may be optimized, the present invention provides an attractive alternative to much more expensive and exotic specialized materials.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the spirit and scope of the appended claims.

## Claims

1. A method of applying a ceramic coating layer to a metallic substrate comprising the steps of:

(a) supplying at least one metallic material and one ceramic material to a zone on said metallic substrate in the presence of heat sufficient to melt said metallic and ceramic materials and a localized portion of said zone of said substrate; and simultaneously

(b) continuously varying the ratio of said metallic to said ceramic materials to build up a surface layer which progresses from an all metallic layer at the interface with the metallic substrate to an all ceramic layer remote from said interface.

2. A method according to Claim 1, wherein the metallic material is selected from the group consisting essentially of copper, manganese, boron, molybdenum, ferrous and noble metal 5.

3. A method according to Claim 1 or 2, wherein the ceramic material is selected from the group of refractory oxides consisting essentially of silica, alumina, magnesia, calcia, titania, zirconia, chrome, iron-oxide and combinations thereof.

4. A method according to Claim 1 or 2, wherein the ceramic material is graphite, a carbide, a nitride, a carbon-nitride or combinations thereof.

5. A method according to any one of the preceding claims, wherein, during step (a), particles of said ceramic and metallic materials are entrained in separate gas flows.

6. A method according to any one of the preceding claims, wherein said metallic material and said ceramic material are in powder form, and prior to step (a), each is mixed with combustible particles.

7. A method according to Claim 6, wherein said combustible particles comprise one or more of silicon, aluminum, calcium, manganese, magnesium, iron, boron and molybdenum.

8. A method of applying a metallic coating layer to a ceramic substrate comprising the steps of:

(a) supplying at least one metallic material and one ceramic material to a zone on said ceramic substrate in the presence of heat sufficient to melt said ceramic and metallic materials and a localized portion of said zone of said substrate; and simultaneously

(b) continuously varying the ratio of said metallic and ceramic materials to build up a surface layer which progresses from an all ceramic layer at the interface with the ceramic substrate to an all metallic layer remote from said interface.

9. A method according to Claim 8, wherein the metallic material is selected from the group consisting essentially of copper, manganese, boron, molybdenum, the ferrous and noble metals.

10. A method according to Claim 8 or 9, wherein the ceramic material is selected from the group of refractory oxides consisting essentially of silica, alumina, magnesia, calcia, titania, zirconia, chrome, iron-oxide and combinations thereof.

11. A method according to Claim 8 or 9, wherein the ceramic material is graphite, a carbide, a nitride, a carbo-nitride or combinations thereof.

12. A method according to any one of Claims 8 to 11, wherein, during step (a), particles of said ceramic and metallic materials are entrained in separate gas flows.

13. A method according to any one of Claims 8 to 12, wherein said metallic material and said ceramic material are in powder form, and prior to step (a), each is mixed with combustible particles.

14. A method according to Claim 13, wherein said combustible particles comprise one or more of silicon, aluminum, calcium, manganese, magnesium, iron and boron.

15. A method according to Claim 1, which additionally includes the step of continuing to vary the ratio of said metallic to said ceramic materials to build up at least one additional all metallic layer above said all ceramic layer.

16. A method according to Claim 8, which additionally includes the step of continuing to vary the ratio of said metallic to said ceramic materials to build up at least one additional all ceramic layer above said all metallic layer.

FIG.1

HOPPER FOR
METALLIC POWDER
MAJOR CERAMIC MINOR
OR CERAMIC MAJOR, METAL
MINOR

36

AUGUR OR
DISC
POWDER
DISPENSER

38

VENTURI
MIXER

40

GAS
SUPPLY

42

VALVE

44

GAS
SUPPLY

48

INJECTOR

46

VALVE

50

LANCE

52

EXOTHERMIC
REACTION

COMPOSITE
MASS

54

*FIG.2*

# FIG.3

r=0.3l

*FIG.4*

# FIG.5

## FIG. 6

FIG. 7

# FIG. 8

# FIG.9

74